# EUROPÄISCHE PATENTSCHRIFT

(11) **EP 4 002 029 B1**
(45) Veröffentlichungstag und Bekanntmachung des Hinweises auf die Patenterteilung: **20.09.2023**
(21) Anmeldenummer: 20207112.2
(22) Anmeldetag: 12.11.2020
(51) Int. Cl.: G05B 19/418, H01Q 15/14, H01Q 1/22, H01Q 3/00, H01Q 3/08, H04B 7/145

(54) **VERFAHREN UND SYSTEM ZUR FUNKÜBERTRAGUNG VON DATEN EINER PRODUKTIONSANLAGE**
METHOD AND SYSTEM FOR WIRELESS COMMUNICATION OF DATA IN A PRODUCTION AREA
PROCÉDÉ ET SYSTÈME DE TRANSMISSION RADIO DE DONNÉES DANS UNE INSTALLATION DE PRODUCTION

(43) Veröffentlichungstag der Anmeldung: 25.05.2022
(73) Patentinhaber: Siemens AG Österreich, 1210 Wien (AT)
(72) Erfinder: Schiefer, Martin, 3100 St. Pölten (AT); Gila, Janos, 2340 Mödling (AT)
(74) Vertreter: Siemens Patent Attorneys

(56) Entgegenhaltungen:
- STEVEN KISSELEFF ET AL: "Reconfigurable Intelligent Surfaces in Challenging Environments", ARXIV.ORG, CORNELL UNIVERSITY LIBRARY, 201 OLIN LIBRARY CORNELL UNIVERSITY ITHACA, NY 14853, 10. November 2020 (2020-11-10), XP081821414,

## Beschreibung

Die Erfindung betrifft ein computer-implementiertes Verfahren und ein System zur Funkübertragung von Daten einer Produktionsanlage von einem Sender über einen steuerbaren Reflektor zu einem Empfänger.

Die Erfindung betrifft ferner ein entsprechendes Computerprogramm, einen elektronisch lesbaren Datenträger und ein Datenträgersignal.

In modernen Fabriken werden von produzierenden Maschinen immer mehr Arbeitsschritte übernommen, die bisher von Menschen durchgeführt wurden. Dabei spielen die automatische Produktion und die Vernetzung aller Arbeitsgeräte und Arbeitsschritte eine immer wichtigere Rolle. Die Steuerung der Maschinen erfolgt im Allgemeinen durch Industriesteuerungsanlagen wie SIMATIC. Diese Steueranlagen sind heute untereinander meist über elektrische Leitungen verbunden. Zukünftig wird es jedoch nötig sein, die Maschinen sowie die Produktionsschritte besser zu koordinieren, zu optimieren und daher neu zu konfigurieren, was eine Anpassung der Arbeitsschritte beziehungsweise eine örtliche Position der Maschinen erfordern kann.

Bei der Verbindung zwischen Produktionsmaschinen und der Steuereinheit kommen meist spezielle elektrische Leitungen in Form flexibler und teurer Kabel zum Einsatz.

Alternativ stehen auch Funksystem zur Verfügung, welche jedoch in industrieller Umgebung wie in einer Halle mit vielen Maschinen, welche üblicherweise eine Vielzahl an Stellen für Reflexionen und Abschattungen für Funkwellen bilden. Ferner besteht nicht immer direkter Sichtkontakt zwischen eine Send- und einer Empfangseinheit. Diese genannten Einflüsse können dafür sorgen, dass eine Funkübertragung insbesondere bei höheren Frequenzen, welche meist eine große Bandbreite, eine geringe Latenz, kleine Baugröße, geringen Komplexität und geringe Kosten für das Funksystem erlauben, ungünstig beeinträchtigt wird und die Verfügbarkeit des Produktionssystems dadurch unzureichend ist.

Um die Verfügbarkeit des Produktionssystems bei Anwendung eines Funksystems zu verbessern, kann die Anzahl der Funkmodule vergrößert werden, was jedoch zu hohen Infrastrukturkosten führen kann.

Alternativ kann ein sogenannter intelligenter Reflektor zwischen Sender und Empfänger platziert werden, an welchem die Funkwellen gezielt reflektiert werden und wodurch eine verbesserte Funkverbindung zwischen Sender und Empfänger entsteht. Dabei besteht jedoch in der Regel das Problem, dass der Funkkanal unbekannte Funkkanal-Parameter aufweist, welche in Kosten und Zeit aufwändig erfasst werden müssen. Außerdem sind derart bestimmte Funkkanal-Parameter nur für eine Anlagen-Konfiguration in einer Halle gültig und müssen für eine geänderte Konfiguration neu bestimmt werden.

Derartige Konfigurationsänderungen können eine rasche Adaptierung des Funksystem erfordern, was die Systemkomplexität im Stand der Technik unerwünscht vergrößert und Kostennachteil mit sich bringt.

Die genannten Nachteile schränken die Mobilität von Anlagenteilen insbesondere in einer Industriehalle stark ein.

In der Veröffentlichung STEVEN KISSELEFF ET AL: "Intelligent Surfaces in Environments", ARXIV.ORG, CORNELL UNIVERSITY LIBRARY, 201 OLIN LIBRARY CORNELL UNIVERSITY ITHACA, NY 14853, 10. November 2020 (2020-11-10), XP081821414,
wird ein Verfahren zur Verbesserung der Konnektivität eines Funksystems beschrieben, bei welchem sind wiederholende infrastrukturelle Bewegungen im Funksystem durch entsprechende Funkkanalmodelle kompensiert werden, was jedoch mit einem entsprechenden Aufwand und hoher Systemkomplexität einhergeht.

Es ist Aufgabe der Erfindung die genannten Nachteile zu überwinden und eine Lösung bereitzustellen, welche eine verbesserte Mobilität einer Anlagen-Konfiguration bei Verwendung einer Funkkommunikation erlaubt.

Die erfindungsgemäße Aufgabe wird durch eine Vorrichtung eingangs genannter Art gelöst, wobei zumindest ein Funkkanalmodell auf Basis maschinellen Lernens für die Produktionsanlage zwischen dem Sender und dem Empfänger von einem Prozessor mit einem Speicher erzeugt und trainiert wird, wobei jeweils ein Funkkanalmodell für eine Konfiguration von Anlagen der Produktionsanlage ermittelt wird, und eine aktuelle Konfiguration von Anlagen der Produktionsanlage ermittelt wird, und für die aktuelle Konfiguration der Reflektor mithilfe des ermittelten Funkkanalmodells angesteuert wird, und die Daten vom Sender über den Reflektor zum Empfänger übertragen werden.

Durch die Erfindung wird bei einer Neukonfiguration des Produktionssystems mit Maschinen eine verbesserte Funkverbindung erreicht. Wird eine Maschine neu angeordnet, so kann mithilfe maschinellen Lernens eine günstige Stellung des Reflektors ermittelt werden, durch welche eine gute Funkübertragung zwischen Sender und Empfänger über den Reflektor erzielt wird.

Der steuerbare Reflektor kann beispielsweise durch eine elektrisch ansteuerbare, physikalische ein- oder mehrteilige Reflektorfläche auf Metall oder auch durch ein oder mehrere elektronisch steuerbare Antennenelemente gebildet sein, welche auch Reflektor-Elemente und Direktor-Elemente aufweisen können.

Je nach gewünschtem Frequenzbereich des Reflektors können verschiedene Ausführungsformen für einen Reflektor günstig sein, beispielsweise im hochfrequenten Gigahertz-Bereich als variabel ansteuerbares Antennen-Array, welches einen steuerbaren komplexen Widerstand im Antennen-Fußpunkt aufweist.

Unter dem steuerbaren Reflektor wird in diesem Zusammenhang eine Vorrichtung verstanden, welche elektro-magnetische Wellen beispielsweise aus einer Richtung empfängt, und gesamt oder auch nur teilweise in eine andere Richtung gezielt reflektiert, und/oder umgekehrt.

Unter einer Reflektorfläche eines steuerbaren Reflektors wird somit beispielsweise nicht nur eine geometrische Fläche verstanden, sondern auch die Apertur oder die Richtcharakteristik des steuerbaren Reflektors.

Mittels einer elektronischen Ansteuerung von einem oder mehreren Reflektor-Elementen kann eine variabel definierbare Reflexions-Charakteristik beziehungsweise -Muster für den steuerbaren Reflektor erreicht werden, beispielsweise mithilfe von phasenschiebenden Elementen oder Bauteilen in der Ansteuerung des steuerbaren Reflektors.

Die aktuelle Konfiguration des Reflektors beziehungsweise der Reflektorfläche kann mithilfe eines drahtlosen oder drahtgebundenen Kommunikationskanals übertragen werden, um mithilfe entsprechender Steuerungsmittel den steuerbaren Reflektor in der aktuellen Konfiguration anzusteuern.

Es ist ferner vorgesehen, dass zwischen einer vorhergehenden, bekannten Konfiguration von Anlagen der Produktionsanlage und der aktuellen Konfiguration eine Bewegungstrajektorie der Konfigurationsänderungen ermittelt wird und entlang der Bewegungstrajektorie an gewählten Stützstellen eine jeweilige Konfiguration von Anlagen und Gebäudeinformationen der Produktionsanlage ermittelt wird, für welche der Reflektor mithilfe des entsprechenden Funkkanalmodells angesteuert wird.

Dadurch wird erreicht, dass während des gesamten Produktionsprozesses, also über mehrere Herstellungsschritte hinweg, eine hinreichend gute Qualität der Datenübertragung zwischen dem Sender und dem Empfänger trotz einer Konfigurationsänderung der Anlagen sichergestellt werden kann.

Es kann ferner ein Funksystem sehr einfach beziehungsweise optimal ausgelegt werden, was das System vereinfacht, kostengünstig ist und eine robuste Datenübertragung im Betrieb erlaubt, welche sehr dynamisch auf eine Änderung in der Konfiguration der Maschinen-Standorte oder des Interieurs reagieren kann.

Es kann in manchen Fällen sogar auf eine System-Redundanz verzichtet werden.

In einer Weiterbildung der Erfindung ist es vorgesehen, dass die aktuelle Konfiguration zusätzlich Informationen hinsichtlich des Gebäudes und/oder des Interieurs und/oder der Maschinengeometrie der Produktionsanlage umfasst.

Dadurch wird erreicht, dass während einer Konfigurationsänderung der Anlagen auch das Umfeld der jeweiligen Anlage bei der Bestimmung des Funkkanalmodells berücksichtigt wird.

In einer Weiterbildung der Erfindung ist es vorgesehen, dass die Bestimmung des Funkkanalmodells für einen jeweiligen Produktionsschritt durch den Prozessor erfolgt und der Reflektor mithilfe des entsprechenden Funkkanalmodells für den jeweiligen Produktionsschritt angesteuert wird.

Dadurch ist es möglich auch während einer Prozesskette zur Herstellung eines komplexen Produkts die Qualität der Datenübertragung zwischen dem Sender und dem Empfänger sichergestellt werden kann, da dem Prozessor die für einen jeweiligen Prozessschritt notwendigen Ressourcen, das heißt beispielsweise die eingesetzten Anlagen der Produktionsanlage und deren jeweils aktuelle Anordnung innerhalb der Produktionsanlage, bekannt sind und im Funkkanalmodell dementsprechend berücksichtigt werden können.

Ferner kann durch eine bekannte neue Konfiguration die Neubestimmung des nachfolgenden Funkkanalmodells mittels künstlicher Intelligenz besonders einfach ermittelt werden, was insbesondere entlang von Trajektorien vorteilhaft ist.

Trajektorien können beispielsweise für mobile Maschinen mit vorbestimmtem Bewegungsverlauf auf einfache Weise bestimmt werden.

In einer Weiterbildung der Erfindung ist es vorgesehen, dass bei der Bestimmung des Funkkanalmodells ein Ray-Tracing-Verfahren durch den Prozessor berücksichtigt werden.

Dadurch kann die Anzahl zu bestimmenden Funkkanalmodelle reduziert werden und die Effizient bei der Berechnung verbessert werden.

Mit anderen Worten können unrealistische, unwahrscheinliche oder theoretisch unmögliche Szenarien bei der Funkwellenausbreitung ausgelassen werden, sowohl in der Trainingsphase als auch in der Anwendungsphase des Funkkanalmodells.

In einer Weiterbildung der Erfindung ist es vorgesehen, dass die jeweilige Position zumindest teilweise für die Anlagen der Produktionsanlage ermittelt wird und bei der Bestimmung des Funkkanalmodells berücksichtigt wird.

Es kann ferner vorgesehen sein, dass die aktuelle Stellung des verstellbaren Reflektors bei der Bestimmung des Funkkanalmodells berücksichtigt wird, beispielsweise im Sinne einer Ausgangsstellung, vor der ausgehen eine neue Stellung ermittelt wird, was eine Aktualisierung des Funkkanalmodells vereinfachen kann.

Außerdem kann es vorgesehen sein, dass die aktuelle Qualität der Funkkommunikation zwischen dem Sender und dem Empfänger bei der Bestimmung des Funkkanalmodells berücksichtigt wird, beispielsweise um eine Validierung mit einem bestehenden Funkkanalmodell durchzuführen.

Dadurch kann die Komplexität bestimmter Funkkanalmodelle und deren Berechnung reduziert werden
In einer Weiterbildung der Erfindung ist es vorgesehen, dass die Ermittlung des Funkkanalmodells vom Prozessor gesteuert in der Cloud erfolgt.

Dadurch kann das lokale System optimiert gestaltet werden und rechenintensive Vorgänge können durch ein effizientes Cloud-System erfolgen.

Die Aufgabe der Erfindung wird auch durch ein Computerprogramm gelöst, umfassend Befehle, welche bei deren Ausführung durch einen Computer diesen veranlassen, das erfindungsgemäße Verfahren auszuführen.

Die Aufgabe der Erfindung wird auch durch einen elektronisch lesbaren Datenträger mit darauf gespeicherten lesbaren Steuerinformationen gelöst, welche zumindest das erfindungsgemäße Computerprogramm umfassen und derart ausgestaltet sind, dass sie bei Verwendung des Datenträgers in einer Recheneinrichtung ein erfindungsgemäße Verfahren durchführen.

Die Aufgabe der Erfindung wird auch durch ein Datenträgersignal gelöst, welches das erfindungsgemäße Computerprogramm überträgt.

Die Aufgabe der Erfindung wird auch durch ein System zur Funkübertragung von Daten einer Produktionsanlage von einem Sender über zumindest einen steuerbaren Reflektor zu einem Empfänger gelöst, wobei das System einen Prozessor mit einem Speicher aufweist, welcher Prozessor dazu eingerichtet ist, zumindest ein Funkkanalmodell für die Produktionsanlage zwischen dem Sender und dem Empfänger zu erzeugen und zu trainieren, wobei jeweils ein Funkkanalmodell für eine Konfiguration von Anlagen und Gebäudeinformationen der Produktionsanlage vorliegt, und der Prozessor ferner dazu eingerichtet ist, das erfindungsgemäße Verfahren auszuführen.

In einer Weiterbildung der Erfindung ist es vorgesehen, dass der Sender und der der Reflektor in jeweils unterschiedlichen Konfigurationen von Anlagen und Gebäudeinformationen örtlich an denselben Positionen angeordnet sind.

In einer Weiterbildung der Erfindung ist es vorgesehen, dass der Sender und der der Reflektor durch ein leitungsgebundenes Datenübertragungssystem an das System verbunden sind.

Die Erfindung wird nachfolgend anhand eines in den beigeschlossenen Zeichnungen dargestellten Ausführungsbeispiels näher erläutert. In den Zeichnungen zeigt:
- Fig. 1: ein erstes Beispiel für eine Konfiguration von Anlagen eines Produktionssystems,
- Fig. 2: ein zweites Beispiel für eine Konfiguration von Anlagen eines Produktionssystems.

Es ist klar, dass weitere nicht gezeigte Teile für den Betrieb einer Produktionsanlage notwendig sind, wie Werkstücke, Betriebsmittel oder Elektroniksteuerungen. Zum besseren Verständnis werden diese Teile nicht dargestellt und beschrieben.

Die Erfindung ist nicht auf die hier im Detail beschriebenen spezifischen Ausführungsformen beschränkt, sondern umfasst alle Varianten, Kombinationen und Modifikationen davon, die in den Rahmen der beigefügten Ansprüche fallen.

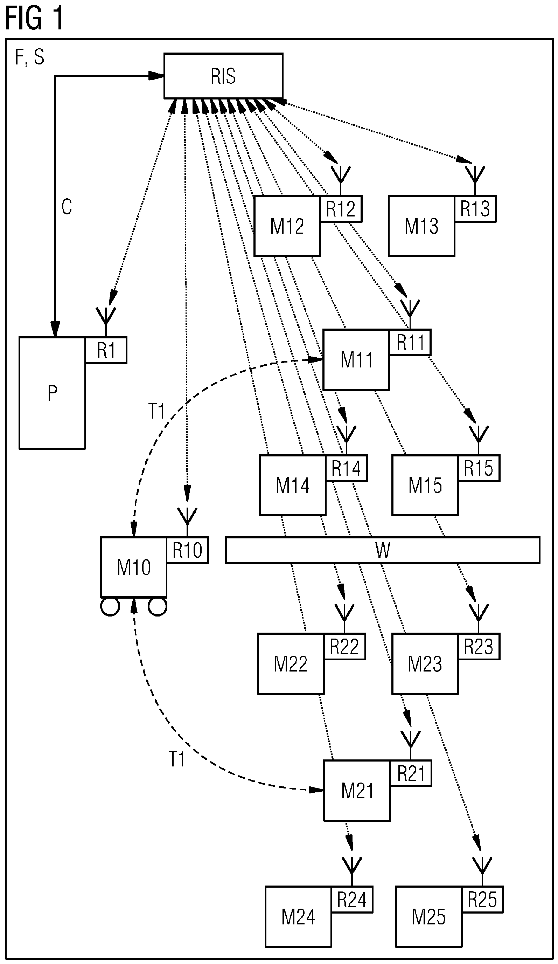

**Fig. 1** zeigt ein erstes Beispiel für eine Konfiguration von Anlagen in Form von Maschinen M10-M15, M21-M25 eines Produktionssystems S, welches innerhalb einer Fertigungsanlage F, wie eine Industriehalle angeordnet ist.

Die Figur zeigt eine schematische Ansicht von oben, wobei zu beachten ist, dass der Sender und/oder der steuerbare Reflektor RIS vorteilhaft hoch über dem Boden befestigt sein sollten, um nach Möglichkeit eine direkte Sichtverbindung zu den Maschinen M10-M15, M21-M25 zu ermöglichen.

Dies ist allerding nicht immer möglich, beispielsweise wenn eine Maschine eine sehr große Bauform beziehungsweise Maschinengeometrie aufweist, wie eine CNC-Fräsmaschine in einem Sicherheitskäfig, oder ein Interieur, wie eine Sicherheitswand W.

Eine aktuelle Konfiguration kann daher Informationen hinsichtlich des Gebäudes der Fertigungsanlage F und/oder des Interieurs und/oder der Maschinengeometrie der Produktionsanlage F umfassen.

Ein Roboterarm M11 zieht zur Bearbeitung eines Werkstücks die Maschinen M12 bis M15 hinzu.

Beispielsweise kann die Maschine M12 bohren, die Maschine M13 Fräsen, die Maschine M14 polieren und die Maschine M15 Schrauben einbringen.

Eine mobile Transportmaschine M10 transportiert das bearbeitete Werkstück zu einem nächsten Herstellungsschritt.

In der Figur ist eine Bewegungstrajektorie T1 erkennbar, entlang welcher sich die Transportmaschine M10 von einem Herstellungsschritt zu einem nachfolgenden Herstellungsschritt bewegt.

Dabei zieht wiederum ein Roboterarm M21 zur Bearbeitung des Werkstücks die Maschinen M22 bis M25 hinzu.

Beispielsweise kann die Maschine M22 kleben, die Maschine M13 nieten, die Maschine M14 Flächen mit Chemikalien vorbehandeln und die Maschine M15 verschrauben.

Ein Prozessor P mit einem Speicher ist mit einem Sender R1, beispielsweise eine WLAN-Basisstation, drahtgebunden verbunden, wobei zwischen dem Prozessor P und dem Sender R1 aufgrund von entsprechenden Montageerfordernissen auch ein Abstand vorgesehen sein kann.

Jede Maschine ist in diesem Beispiel mit einem eigenen Funkmodul R10-R15 oder R21-R25 ausgestattet, mit welchem die jeweilige Anlage mit einer zentralen Steuereinheit kommunizieren kann.

Es ist klar, dass auch eine direkte Sicht-Funkverbindung zwischen dem Sender R1 und einem oder mehreren Empfängern R10-R15, R21-R25 erfolgen kann.

Im computer-implementiertes Verfahren zur Funkübertragung von Daten der Produktionsanlage F zwischen dem Sender R1, dem Reflektor RIS mit einem steuerbaren Reflektor und dem Empfänger R10-R15 oder R21-R25 strahlt der Sender R1 ein Sendesignal mit den Daten der Produktionsanlage F ab, welches von dem Reflektor RIS reflektiert wird und von dem entsprechenden Empfänger R10-R15 oder R21-R25 empfangen wird.

Dabei wird zumindest ein Funkkanalmodell auf Basis maschinellen Lernens für die Produktionsanlage F zwischen dem Sender R1 und dem Empfänger R10-R15, R21-R25 von dem Prozessor P mit dem Speicher erzeugt und trainiert.

Es wird jeweils ein Funkkanalmodell für eine Konfiguration von Anlagenteilen M10-M15, M21-M25 der Produktionsanlage F ermittelt.

Ferner wird eine aktuelle Konfiguration der Anlagenteile M10-M15, M21-M25 der Produktionsanlage F ermittelt.

Für die aktuelle Konfiguration wird der Reflektor RIS mithilfe des ermittelten Funkkanalmodells angesteuert.

Um eine Funkverbindung zwischen der zentralen Steuereinheit, welche den Prozessor P mit dem Speicher aufweist, sicherzustellen, ist der steuerbarer Reflektor RIS vorgesehen, welcher Einfluss auf die Funkkanäle haben kann.

Der Prozessor P kann mit einer Cloud verbunden sein, um beispielsweise komplexe Berechnungen wie die Ermittlung eines Funkkanalmodells in der Cloud durchzuführen, welche durch den Prozessor P gesteuert werden.

Die Bestimmung eines Funkkanalmodells für einen jeweiligen Produktionsschritt innerhalb eines Herstellungsprozesses für ein Werkstück oder ein Produkt kann durch den Prozessor (P) erfolgen.

Der Reflektor RIS wird mithilfe des entsprechenden Funkkanalmodells für den jeweiligen Produktionsschritt angesteuert.

Bei der Bestimmung des Funkkanalmodells kann ein Ray-Tracing-Verfahren durch den Prozessor P berücksichtigt werden.

Die jeweils aktuelle Position für die Anlagenteile M10-M15, M21-M25 der Produktionsanlage F kann ermittelt werden und bei der Bestimmung des Funkkanalmodells berücksichtigt werden.

Der steuerbare Reflektor RIS kann beispielweise ein elektromagnetischer Spiegel sein, welcher mittels Servomotoren horizontal gedreht und/oder vertikal geneigt werden kann.

In einem weiteren Ausführungsbeispiel der Erfindung kann die Antennen-Charakteristik des Reflektors RIS durch elektronische Mittel verändert werden; die mechanische Position kann dabei unverändert bleiben.

Mittel zur Steuerung einer Antennencharakteristik können beispielsweise PIN- oder Varaktor-Dioden, sowie Halbleiter- oder MEMS-Bauteile sein.

Es kann auftreten, dass Maschinen M10-M15, M21-M25 in einer vorgesehenen Position innerhalb der Fertigungsanlage F eine gute Funkverbindung zur zentralen Steuereinrichtung aufweisen.

Für diese Fälle ist es nicht unbedingt notwendig, über den steuerbaren Reflektor RIS eine Verbesserung der Funkverbindung herzustellen.

Für jene Fälle, in denen beispielsweise eine Abschattung durch große Anlagenteile oder hinsichtlich des Gebäudes, des Interieurs wie die Sicherheitswand W oder der Maschinengeometrie von Anlagenteilen der Produktionsanlage F vorliegt, kann über eine entsprechende Justierung des steuerbaren Reflektors RIS eine Verbesserung in den Eigenschaften des Funckanals erreicht werden.

Der Reflektor RIS wird durch den Prozessor P in Drehung und Schwenkung gesteuert, wobei dafür ein drahtgebundener Kommunikationskanal C zur Verfügung steht, da es in diesem Beispiel vorgesehen ist, dass der Prozessor P und der Reflektor RIS an einem festen Ort montiert sind, während die Anlagenteile M10-M15, M21-M25 konfigurierbar, das heißt beweglich sind.

Der Kommunikationskanal C kann auch dazu dienen, Steuerinformationen zur Ansteuerung der Antennen-Charakteristik durch elektronische Mittel des Reflektors RIS zu übertragen.

Der Kommunikationskanal kann auch durch eine drahtlose Funkübertragung statt einer leitungsgebunden Übertragung ausgeführt werden, beispielsweise mittels Bluetooth, ZigBee, Wireless HART oder ähnlichem.

Die Maschinen M10-M15, M21-M25, der Prozessor P und die jeweiligen Funkmodule R1, R10-R15, R21-R25 bilden ein System S mit eine ersten Konfiguration, welche den aktuellen Ort beziehungsweise die aktuelle Position der Maschinen umfasst.

Es kann zwischen einer vorhergehenden, bekannten Konfiguration von den Anlagenteilen M10-M15, M21-M25 der Produktionsanlage F und der aktuellen Konfiguration eine Bewegungstrajektorie T1 der Konfigurationsänderungen ermittelt werden.

Entlang der Bewegungstrajektorie T1 werden an gewählten Stützstellen eine jeweilige Konfiguration der Anlagenteile M10-M15, M21-M25 und Gebäudeinformationen der Produktionsanlage F ermittelt, für welche der Reflektor RIS mithilfe des entsprechenden Funkkanalmodells angesteuert wird.

In der Figur sind Steuervorrichtungen zur Steuerung der Maschinen oder andere Anlagen, die zur Herstellung eines Werkstücks durch die Produktionsanlage F benötigt werden, zu besseren Verständnis der Erfindung nicht dargestellt.

Es ist klar, dass anstellen eines einzigen steuerbaren Reflektors RIS auch mehrere steuerbare Reflektoren in einem erfindungsgemäßen System eingesetzt werden können.

In der Figur sind die Funkverbindungen strichliert symbolisch angedeutet, wobei klar ist, dass eine Mehrwegausbreitung über mehrere Reflexionsstellen hinweg in einer realen Funkverbindung eingeschossen ist.

Die Funktion eines Senders oder Empfängers ist eine aktuelle Funktion des jeweiligen Funkmoduls zu einem bestimmten Zeitpunkt, welches natürlich auch in umgekehrter Richtung kommunizieren kann.

Mit anderen Worten kann ein Funkmodul R10-R15, R21-R25 einer zugeordneten Maschine M10-M15, M21-M25 zu einem Zeitpunkt auch in der Funktion eines Senders sein, und das Funkmodul R1 des zugeordneten Prozessors P dementsprechend in der Funktion eines Empfängers.

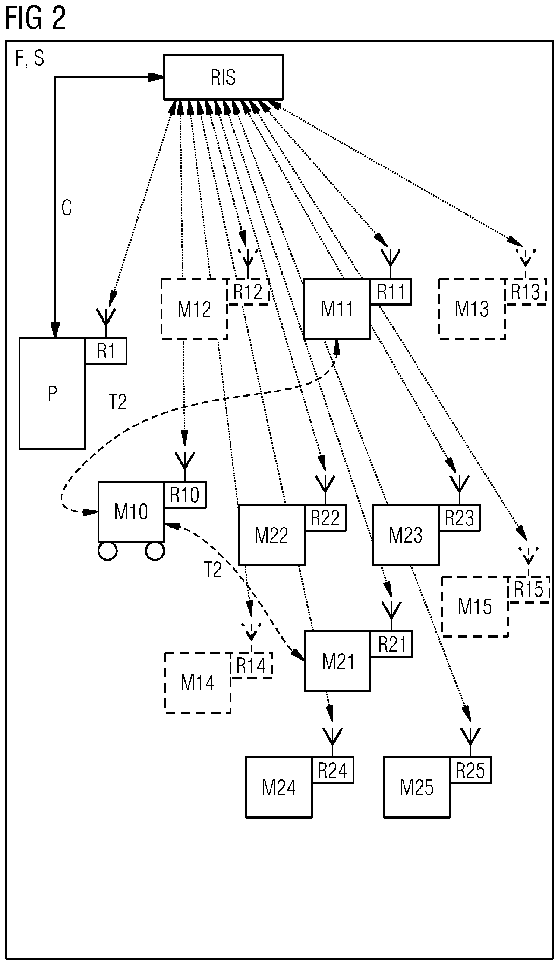

In **Fig. 2** ist ein zweites Beispiel für eine weitere Konfiguration der Anlagen der Produktionsanlage F gezeigt, wobei der aktuelle Ort beziehungsweise die aktuelle Position der Maschinen R10-R15, R21-R25 geändert ist.

Ferner weist eine Trajektorie T2 der mobilen Transportmaschine M10 einen geänderten Verlauf auf.

Die geänderten Positionen können dazu führen, dass die Funckanäle anders verlaufen beziehungsweise beispielsweise durch Abschattungen oder Reflexionen an anderen Maschinen oder Gebäudeteilen unerwünscht gestört werden.

Die weiteren Ausführungen der vorgehenden Figur gelten entsprechend.

### Bezugszeichenliste:

- C: Kommunikationskanal
- F: Produktionsanlage
- M10: mobile Transportmaschine
- M11, M21 M12-M15,: Roboterarm
- M22-M25: Produktionsmaschine
- P: Prozessor
- R1, R10-R15, R21-R25: Funkmodul, engl. "radio"
- RIS: steuerbarer Reflektor, engl. "reflective intelligent surface"
- S: System
- T1, T2: Trajektorie
- W: Sicherheitswand

## Patentansprüche

1. Computer-implementiertes Verfahren zur Funkübertragung von Daten einer Produktionsanlage (F) von einem Sender (R1) über einen steuerbaren Reflektor (RIS) zu einem Empfänger (R10-R15, R21-R25), wobei zumindest ein Funkkanalmodell auf Basis maschinellen Lernens für die Produktionsanlage (F) zwischen dem Sender (R1) und dem Empfänger (R10-R15, R21-R25) von einem Prozessor (P) mit einem Speicher erzeugt und trainiert wird, wobei jeweils ein Funkkanalmodell für eine Konfiguration von Anlagen (M10-M15, M21-M25) der Produktionsanlage (F) ermittelt wird, und eine aktuelle Konfiguration von Anlagen (M10-M15, M21-M25) der Produktionsanlage (F) ermittelt wird, und für die aktuelle Konfiguration der steuerbare Reflektor (RIS) mithilfe des ermittelten Funkkanalmodells angesteuert wird, und die Daten vom Sender (R1) über den steuerbare Reflektor (RIS) zum Empfänger (R10-R15, R21-R25) übertragen werden, **dadurch gekennzeichnet, dass** zwischen einer vorhergehenden, bekannten Konfiguration von Anlagen (M10-M15, M21-M25) der Produktionsanlage (F) und der aktuellen Konfiguration eine Bewegungstrajektorie (T1, T2) der Konfigurationsänderungen ermittelt wird und entlang der Bewegungstrajektorie (T1, T2) an gewählten Stützstellen eine jeweilige Konfiguration von Anlagen (M10-M15, M21-M25) und Gebäudeinformationen der Produktionsanlage (F) ermittelt wird, für welche der steuerbare Reflektor (RIS) mithilfe des entsprechenden Funkkanalmodells angesteuert wird.

2. Verfahren nach dem vorhergehenden Anspruch, wobei die aktuelle Konfiguration zusätzlich Informationen hinsichtlich des Gebäudes und/oder des Interieurs (W) und/oder der Maschinengeometrie der Produktionsanlage (F) umfasst.

3. Verfahren nach einem der vorhergehenden Ansprüche, wobei die Bestimmung des Funkkanalmodells für einen jeweiligen Produktionsschritt durch den Prozessor (P) erfolgt und der steuerbare Reflektor (RIS) mithilfe des entsprechenden Funkkanalmodells für den jeweiligen Produktionsschritt angesteuert wird.

4. Verfahren nach einem der vorhergehenden Ansprüche, wobei bei der Bestimmung des Funkkanalmodells ein Ray-Tracing-Verfahren durch den Prozessor (P) berücksichtigt werden.

5. Verfahren nach einem der vorhergehenden Ansprüche, wobei die jeweilige Position zumindest teilweise für die Anlagen (M10-M15, M21-M25) der Produktionsanlage (F) ermittelt wird und bei der Bestimmung des Funkkanalmodells berücksichtigt wird.

6. Verfahren nach einem der vorhergehenden Ansprüche, wobei die Ermittlung des Funkkanalmodells vom Prozessor (P) gesteuert in der Cloud erfolgt.

7. Computerprogramm, umfassend Befehle, welche bei deren Ausführung durch einen Computer diesen veranlassen, das Verfahren nach einem der vorhergehenden Ansprüche auszuführen.

8. Elektronisch lesbarer Datenträger mit darauf gespeicherten lesbaren Steuerinformationen, welche zumindest ein Computerprogramm nach dem vorhergehenden Anspruch umfassen und derart ausgestaltet sind, dass sie bei Verwendung des Datenträgers in einer Recheneinrichtung ein Verfahren nach einem der Ansprüche 1 bis 6 durchführen.

9. Datenträgersignal, welches das Computerprogramm nach Anspruch 7 überträgt.

10. System (S) zur Funkübertragung von Daten einer Produktionsanlage (F) von einem Sender (R1) über einen steuerbaren Reflektor (RIS) zu einem Empfänger (R10-R15, R21-R25), wobei das System einen Prozessor (P) mit einem Speicher aufweist, welcher Prozessor (P) dazu eingerichtet ist, zumindest ein Funkkanalmodell auf Basis maschinellen Lernens für die Produktionsanlage (F) zwischen dem Sender (R1) und dem Empfänger (R10-R15, R21-R25) zu erzeugen und zu trainieren,
wobei jeweils ein Funkkanalmodell für eine Konfiguration von Anlagen (M10-M15, M21-M25) und Gebäudeinformationen der Produktionsanlage (F) vorliegt, **dadurch gekennzeichnet, dass** der Prozessor (P) ferner dazu eingerichtet ist, das Verfahren nach einem der Ansprüche 1 bis 6 auszuführen.

11. System (S) nach dem vorhergehenden Anspruch, wobei der Sender (R1) und der steuerbare Reflektor (RIS) in jeweils unterschiedlichen Konfigurationen von Anlagen (M10-M15, M21-M25) und Gebäudeinformationen örtlich an denselben Positionen angeordnet sind.

12. System (S) nach einem der Ansprüche 10 oder 11, wobei der Sender (R1) und der steuerbare Reflektor (RIS) durch ein leitungsgebundenes Datenübertragungssystem an das System (S) verbunden sind.

## Claims

1. Computer-implemented method for the radio transmission of data in relation to a production installation (F) from a transmitter (R1) to a receiver (R10-R15, R21-R25) via a controllable reflector (RIS), wherein at least one radio channel model is generated and trained on the basis of machine learning for the production installation (F) between the transmitter (R1) and the receiver (R10-R15, R21-R25) by a processor (P) with a memory, wherein a respective radio channel model is ascertained for a configuration of installations (M10-M15, M21-M25) of the production installation (F), and a current configuration of installations (M10-M15, M21-M25) of the production installation (F) is ascertained, and the controllable reflector (RIS) is actuated with the aid of the ascertained radio channel model for the current configuration, and the data are transmitted from the transmitter (R1) to the receiver (R10-R15, R21-R25) via the controllable reflector (RIS), **characterized in that,** between a previous, known configuration of installations (M10-M15, M21-M25) of the production installation (F) and the current configuration, a motion trajectory (T1, T2) of the configuration changes is ascertained and a configuration of installations (M10-M15, M21-M25) and building information in relation to the production installation (F) are each ascertained along the motion trajectory (T1, T2) at selected discrete points, for which the controllable reflector (RIS) is actuated with the aid of the corresponding radio channel model.

2. Method according to the preceding claim, wherein the current configuration additionally comprises information about the building and/or the interior (W) and/or the machine geometry of the production installation (F).

3. Method according to either of the preceding claims, wherein the radio channel model for a respective production step is determined by the processor (P) and the controllable reflector (RIS) is actuated with the aid of the corresponding radio channel model for the respective production step.

4. Method according to one of the preceding claims, wherein a ray tracing method is taken into consideration by the processor (P) when determining the radio channel model.

5. Method according to one of the preceding claims, wherein the respective position is ascertained at least partially for the installations (M10-M15, M21-M25) of the production installation (F) and taken into consideration when determining the radio channel model.

6. Method according to one of the preceding claims, wherein the radio channel model is ascertained in the cloud in a manner controlled by the processor (P).

7. Computer program comprising commands that, when they are executed by a computer, prompt said computer to carry out the method according to one of the preceding claims.

8. Electronically readable data carrier containing readable control information stored thereon, which control information comprises at least one computer program according to the preceding claim and is designed such that, when the data carrier is used in a computing apparatus, it performs a method according to one of Claims 1 to 6.

9. Data carrier signal that transmits the computer program according to Claim 7.

10. System (S) for the radio transmission of data in relation to a production installation (F) from a transmitter (R1) to a receiver (R10-R15, R21-R25) via a controllable reflector (RIS), wherein the system has a processor (P) with a memory, which processor (P) is configured to generate and to train at least one radio channel model on the basis of machine learning for the production installation (F) between the transmitter (R1) and the receiver (R10-R15, R21-R25), wherein a radio channel model for a configuration of installations (M10-M15, M21-M25) and building information in relation to the production installation (F) are each present, **characterized in that** the processor (P) is furthermore configured to carry out the method according to one of Claims 1 to 6.

11. System (S) according to the preceding claim, wherein the transmitter (R1) and the controllable reflector (RIS) are arranged spatially at the same positions in respectively different configurations of installations (M10-M15, M21-M25) and building information.

12. System (S) according to either of Claims 10 and 11, wherein the transmitter (R1) and the controllable reflector (RIS) are connected to the system (S) by a wired data transmission system.

## Revendications

1. Procédé mis en oeuvre par ordinateur et permettant de transmettre par radio des données relatives à une installation de production (F) depuis un émetteur (R1) vers un récepteur (R10-R15, R21-R25) en passant par un réflecteur commandable (RIS), dans lequel au moins un modèle de canal radio destiné à l'installation de production (F) entre l'émetteur (R1) et le récepteur (R10-R15, R21-R25) est généré et développé sur la base d'un apprentissage machine par un processeur (P) muni d'une mémoire, dans lequel respectivement un modèle de canal radio destiné à une configuration des équipements (M10-M15, M21-M25) de l'installation de production (F) est déterminé, et une configuration actuelle des équipements (M10-M15, M21-M25) de l'installation de production (F) est déterminée, et le réflecteur commandable (RIS) est commandé pour la configuration actuelle à l'aide du modèle de canal radio déterminé, et les données sont transmises de l'émetteur (R1) vers le récepteur (R10-R15, R21-R25) en passant par le réflecteur commandable (RIS), **caractérisé en ce qu'**une trajectoire de mouvement (T1, T2) des changements de configuration est déterminée entre une configuration antérieure connue des équipements (M10-M15, M21-M25) de l'installation de production (F) et la configuration actuelle, et une configuration respective des équipements (M10-M15, M21-M25) et des informations de bâti de l'installation de production (F), pour laquelle le réflecteur commandable (RIS) est commandé à l'aide du modèle de canal radio correspondant, est déterminée le long de la trajectoire de mouvement (T1, T2) au niveau de noeuds sélectionnés.

2. Procédé selon la revendication précédente, dans lequel la configuration actuelle comprend des informations supplémentaires concernant le bâti et/ou l'intérieur (W) et/ou la géométrie machine de l'installation de production (F).

3. Procédé selon l'une quelconque des revendications précédentes, dans lequel la détermination du modèle de canal radio pour une étape de production respective intervient grâce au processeur (P), et le réflecteur commandable (RIS) est commandé à l'aide du modèle de canal radio correspondant pour l'étape de production respective.

4. Procédé selon l'une quelconque des revendications précédentes, dans lequel un procédé de lancer de rayons est pris en compte par le processeur (P) lors de la détermination du modèle de canal radio.

5. Procédé selon l'une quelconque des revendications précédentes, dans lequel la position respective est déterminée au moins partiellement pour les équipements (M10-M15, M21-M25) de l'installation de production (F) et est prise en compte lors de la détermination du modèle de canal radio.

6. Procédé selon l'une quelconque des revendications précédentes, dans lequel la détermination du modèle de canal radio intervient dans un nuage informatique de manière commandée par le processeur (P).

7. Programme informatique, comprenant des instructions qui, lorsqu'elles sont exécutées par un ordinateur, permettent audit ordinateur de mettre en oeuvre le procédé selon l'une quelconque des revendications précédentes.

8. Support de données lisible électroniquement et sur lequel sont stockées des informations de commande lisibles comprenant au moins un programme informatique selon la revendication précédente et conçues de telle manière qu'elles mettent en oeuvre un procédé selon l'une quelconque des revendications 1 à 6 lorsque le support de données est utilisé dans un dispositif informatique.

9. Signal de support de données, qui transmet le programme informatique selon la revendication 7.

10. Système (S) de transmission radio de données relatives à une installation de production (F) depuis un émetteur (R1) vers un récepteur (R10-R15, R21-R25) en passant par un réflecteur commandable (RIS),
dans lequel le système présente un processeur (P) muni d'une mémoire, ledit processeur (P) étant configuré pour générer et développer, sur la base d'un apprentissage machine, au moins un modèle de canal radio destiné à l'installation de production (F) entre l'émetteur (R1) et le récepteur (R10-R15, R21-R25),
dans lequel il existe respectivement un modèle de canal radio pour une configuration d'équipements (M10-M15, M21-M25) et d'informations de bâti de l'installation de production (F), **caractérisé en ce que** le processeur (P) est en outre conçu pour mettre en oeuvre le procédé selon l'une quelconque des revendications 1 à 6.

11. Système (S) selon la revendication précédente, dans lequel, l'émetteur (R1) et le réflecteur commandable (RIS) sont agencés localement au niveau des mêmes positions dans des configurations respectivement différentes des équipements (M10-M15, M21-M25) et des informations de bâti.

12. Système (S) selon la revendication 10 ou 11, dans lequel l'émetteur (R1) et le réflecteur commandable (RIS) sont reliés au système (S) par un système de transmission de données filaire.
